# EUROPEAN PATENT APPLICATION

(11) **EP 0 569 854 A1**
(43) Date of publication of application: **18.11.1993**
(21) Application number: 93107369.6
(22) Date of filing: 06.05.1993
(51) Int. Cl.: A22C 5/00, B01F 7/04

(54) **A mixing machine for mixing raw meat products**

(30) Priority: 14.05.1992 DK 637/92
(71) Applicant: WOLFKING DANMARK A/S, DK-4200 Slagelse (DK)
(72) Inventor: Ostergaard, Anders, DK-4261 Dalmose (DK)
(74) Representative: Roerboel, Leif

(57) **Abstract**

The mixing machine comprises a mixing trough (1) comprising two parallel and axially horizontally situated mixing troughs having substantially cylindrical bottoms, vertical sides and end walls, and two agitators (2) placed parallel to each other, each in one mixing trough and comprising inclined stirring paddles, said agitators having a mutual centre-to-centre distance smaller than the diameter of the agitators. The agitators and the mixing troughs are preferably so placed that an axis through the common centres of the agitators and the mixing troughs and at right angles to the longitudinal axes thereof forms an angle of 15° with the horizontal plane. The agitators (2) are operated at a synchronous speed in alternately program-controlled directions of rotation, the product in the mixing troughs thereby being forced about therein in the directions indicated by the arrows (C,D). In the bottom of the lower mixing trough, at one end thereof, a horizontally extending conveyor worm (3) is provided, which is placed at right angles to the longitudinal axis of the mixing trough and through which the mixed product is discharged from the mixing machine.

## Description

The present invention relates to a mixing machine for mixing raw meat products, especially meat from oxen, hogs, and poultry, for use for stiff and pasty premixes to be used in the production of so-called fast-food products, such as hamburgers, frankfurters, meat balls, and rissoles, said mixing machine comprising two parallel and axially horizontally situated inter-connected mixing troughs having substantially cylindrical bottoms, vertical sides and end walls, and two agitators placed parallel to each other, one in each mixing trough and comprising inclined stirring paddles, said agitators having a mutual centre-to-centre distance smaller than the diameter of the agitators and being driven synchronously in opposite directions.

In the production of forcemeat products, frozen and preminced raw meat products are extensively used which, partly because of the low temperature, partly because of the kind of the fluids and additives used for the mixture, become very pasty and stiff and, consequently, difficult to process in the further processes of mixing, mincing, and/or possibly fine grinding.

Generally used mixing machines for this purpose are constructed as two parallel, horizontally situated inter-connected troughs having equal inner diameters and equal centre heights, wherein two rotating shafts are provided which have paddles or worm spirals mounted thereon, said paddles or spirals carrying out the mixing process.

For carrying out the final grinding/mincing after finished mixing, several of these known mixing machines are provided with a mincing unit consisting of a conveyor worm and a set of knives mounted parallel to the mixing shafts in the section line of the mixing troughs.

The preminced product to be mixed and further grinded is filled into the mixing container wherein it is mixed with the other ingredients belonging to the product, such as flour, spices, salts, water, etc., the mixture thereby getting a stiff and pasty consistency which makes an effective mixing difficult because the product adheres to the stirring paddles and thus at worst forms two rotating drums around the agitators without being correctly mixed. For the subsequent discharge through the mincing unit this adhesion/ lumping causes that the leading down of the product to the mincing worm becomes uneven with a pulsating and, therefore, varying product structure and quality as a consequence.

From GB 2 030 463 A, a mixer of the above mentioned kind is known, where the emptying of the mixing machine has been simplified to take place from one end of the mixing troughs by displacing the two mixing throughs relative to each other in vertical direction. In this mixing machine, the discharge of the finished product which, besides, is no premix, takes place through a flap in one end wall of the lower mixing trough. No subsequent mincing or fine grinding is made, and the individual constituents are finally amalgamated in the mixing process.

On the basis of the above mentioned prior art, it is the object of the present invention to present a mixing machine which provides an improved mixing, where the individual constituents of the mix are not finally amalgamated during the mixing process but are constantly maintained in a mutual movability relative to each other, which makes it possible to achieve a uniform homogenous mixing before, during, and after the comminuting process.

This is obtained by what is stated in the characterizing clause of claim 1.

Further improvements of the mixing process are obtained by what is stated in the characterizing clause of claim 2.

A more even removal of the premix from the agitator to the conveyor worm for discharging the premix for further processing is obtained by what is stated in the characterizing clause of claim 3.

Claims 4 and 5 state preferred embodiments making it possible to obtain a mincing and fine grinding, respectively, of the removed premix.

The measure stated in claim 6 makes it possible to use the mixing machine without subsequent mincing or fine grinding.

In the following, the invention will be described in details by means of preferred embodiments and with reference to the drawing, where
Figure 1 is a sectional view of the mixing machine according to the invention along a line a-a in Figure 2 at right angles to the shafts of the mixing troughs and the agitators,
Figure 2 is a plan view of the same, and
Figure 3 is an alternative embodiment of the mixing machine according to Figure 2.

The embodiments of the mixing machine shown in the drawing comprise a mixing trough 1 having two parallel and axially horizontally situated mixing troughs having a substantially cylindrical bottom, vertical sides and end walls, and two agitators 2 placed parallel to each other, one in each mixing trough and comprising inclined paddles, the mutual centre-to-centre distance of which is smaller than the diameter of the agitators. The agitators and the mixing troughs are so placed that an axis through the common centres of the agitators and the mixing troughs and at right angles to the longitudinal axes thereof forms an angle of 15° with the horizontal plane. The agitators 2 are operated at a synchronous speed by the motor 9 through the belt drive 10 to a shaft common to the bevel gears 8 and on through the planet pinion gears 7. By the alternately program-controlled direction of rotation of the motor 9, the agitators are driven in the direction of rotation A, the product in the mixing troughs thereby being forced about therein in the direction indicated by the arrows D, and by the direction of rotation B the product in the mixing troughs is moved in the direction indicated by the arrows C. In the bottom of the lower mixing trough there is provided an outlet to a horizontally extending conveyor worm 3 which is situated at right angles to the longitudinal axis of the mixing trough and by way of which the mixed product is discharged from the mixing machine.

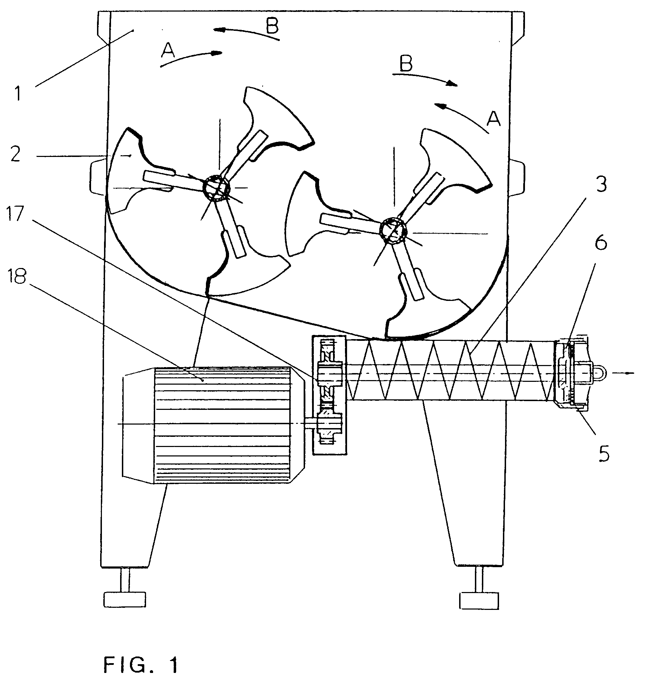

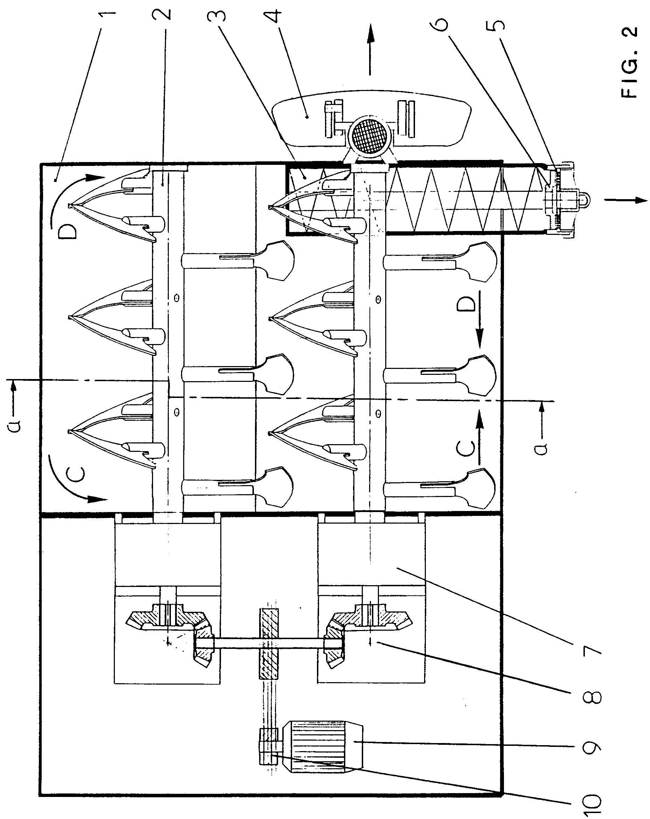

In the embodiment shown in Figures 1 and 2, the conveyor worm 3 is driven by the motor 18 via the gear 17, the product thereby being pressed through the pierced disc 5 while being decomposed by the knife 6.

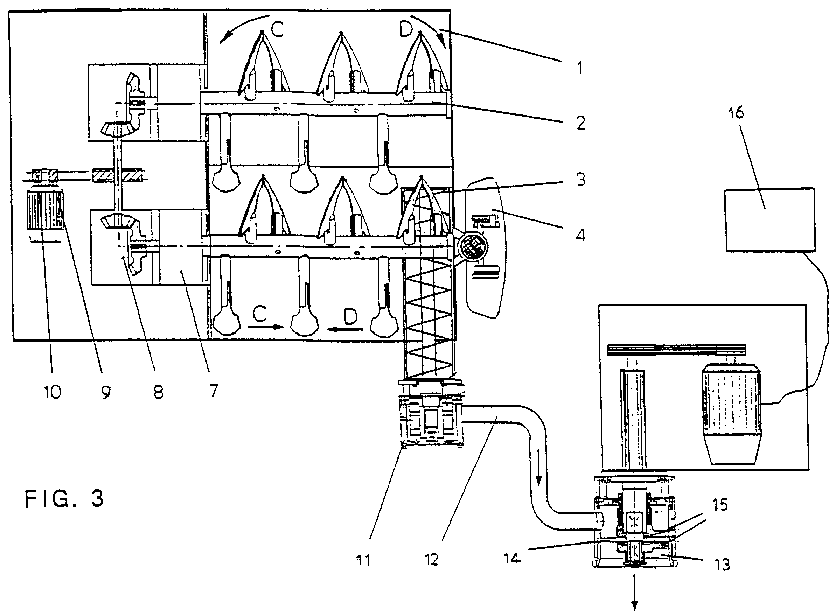

In the embodiment shown in Figure 3, the discharge worm 3 has a displacement pump 11 mounted thereon, which is driven by the motor 18 by way of the shaft of the worm 3. The displacement pump 11 carries the mixed product via a pipe conduit 12 to a separately operated cutting system 13 consisting of a pierced disc 14 surrounded by two rotating knives 15 which are operated by a motor 16.

This system is especially used in cases where the mixed product must be particularly comminuted, especially for finely minced forcemeat, e.g. for sausages and similar products.

During the mixing, the agitators are operated by the motor 9 in alternating directions of rotation A and B. This causes that the product in the mixing troughs is forced in the directions D and C, respectively, and the alternating direction of rotation results in a uniform homogenous mixing without the individual constituents of the mix being finally amalgamated during the mixing process but are constantly being maintained in a mutual movability relative to each other.

During the discharge, the agitators are driven in the direction B, the product thereby being forced about in the mixing trough in the direction C. The mincing worm and the knife or pump mounted thereon are brought into rotation by the motor 18 and the gear 17, the product thereby being discharged from the mixing trough 1 whereby the direction of travel C of the product ensures that the forcemeat mix is easily supplied to the conveyor worm 3 beneath the lower trough.

The placing of the conveyor worm 3 in a direction at right angles to the centre line of the mixing trough ensures that the mix is supplied to the worm at an even speed of introduction.

With a view to discharging a product which is not to be minced, the trough 2 is provided at the end wall thereof with a motor-controlled tapping valve 4. The discharge of the product via the tapping valve 4 takes place during rotation of the agitators in the direction B, the product thereby being forced about in the trough in the direction indicated by the arrows C, so that the forcemeat mix in the lower trough is carried towards the tapping valve 4.

## Claims

1. A mixing machine for mixing raw meat products for use for stiff and pasty premixes to be used in the production of so-called fast-food products, comprising two parallel and axially horizontally situated mixing troughs having substantially cylindrical bottoms, vertical sides and end walls, and two agitators placed parallel to each other, each in one mixing trough and comprising inclined stirring paddles, said agitators having a mutual centre-to-centre distance smaller than the diameter of the agitators and being driven synchronously in opposite directions, **characterized** in that the agitators are driven alternately in one direction of rotation (A) and the opposite direction of rotation (B).

2. A mixing machine according to claim 1, **characterized** in that an axis through the common centres of the agitators and the mixing troughs and at right anlges to the longitudinal axes thereof forms an angle of 15° with the horizontal plane.

3. A mixing machine according to claim 2, **characterized** by an outlet to a horizontally extending conveyor worm being provided in the bottom of the lower mixing trough at one end thereof, said conveyor worm being placed at right angles to the longitudinal axis of the mixing trough, whereby the mixed product is discharged from the mixing machine via said conveyor worm.

4. A mixing machine according to claim 3, **characterized** by the conveyor worm being a mincing worm having a set of knives consisting of a pierced disc and an adjacent rotating knife operated by the worm and adapted to comminute the ready-mixed product.

5. A mixing machine according to claim 3, **characterized** by the conveyor worm terminating in a displacement pump operated by said worm and carrying the ready-mixed product via a pipe conduit to a fast rotating cutting device.

6. A mixing machine according to any of the claims 1 to 5, **characterized** in that it comprises a motor-controlled tapping valve at one end wall of the lower mixing trough for discharging a ready-mixed product which is not to be minced.
